# EUROPÄISCHE PATENTSCHRIFT

(11) **EP 0 984 202 B1**
(45) Veröffentlichungstag und Bekanntmachung des Hinweises auf die Patenterteilung: **31.07.2002**
(21) Anmeldenummer: 98115972.6
(22) Anmeldetag: 25.08.1998
(51) Int. Cl.: F16H 3/093

(54) **Wechselgetriebe in 3-Wellenbauweise, insbesondere für Kraftfahrzeuge**
Three-shaft type transmission for automotive vehicles
Boîte de vitesses du type à trois arbres pour véhicules automobiles

(43) Veröffentlichungstag der Anmeldung: 08.03.2000
(73) Patentinhaber: Ford Global Technologies, Inc., A subsidiary of Ford Motor Company, Dearborn, Michigan 48126 (US)
(72) Erfinder: Eggert, Ulrich, 41751 Viersen (DE); Dahl, Peter, 51515 Kuerten (DE); Nett, Hans Peter, 53518 Adenau (DE); Hegerath, Andreas, 50126 Bergheim (DE)
(74) Vertreter: Drömer, Hans-Carsten, Dipl.-Ing.

(56) Entgegenhaltungen:
- EP-A- 0 083 747
- WO-A-87/00254
- GB-A- 2 069 635
- US-A- 4 658 663

## Beschreibung

Aus der US 4 461 188 A1 ist ein Wechselgetriebe in 3-Wellenbauweise, insbesondere für Kraftfahrzeuge bekannt, das in etwa dem Oberbegriff des Patentanspruches 1 entspricht.

Bei dem bekannten Wechselgetriebe in 3-Wellenbauweise, insbesondere für Kraftfahrzeuge wird gleichfalls eine selektiv schaltbare Doppel-Reibscheibenkupplung verwendet, um eine zentrale Eingangswelle und eine konzentrische Eingangshohlwelle anzutreiben und eine Vielzahl von miteinander in Eingriff stehenden Zahnradpaare werden über entsprechende Synchronkupplungen mit ihren Wellen treibend verbunden. Das bekannte Wechselgetriebe ist hierbei so aufgebaut, daß beide der als Neben- oder Vorgelegewellen zu bezeichnenden Getriebewellen als Abtriebswellen ausgebildet sind, die über jeweils ein entsprechendes Abtriebsritzel auf ein Endabtriebszahnrad wirken.

Bei dem bekannten Wechselgetriebe sind die Zahnradpaare derart angeordnet, daß im wesentlichen nur die für ein Kraftfahrzeug gewünschten vier Vorwärtsgänge und ein Rückwärtsgang bereitgestellt werden.

Die Aufgabe der Erfindung ist es, ein Wechselgetriebe in 3-Wellenbauweise, insbesondere für Kraftfahrzeuge zu schaffen, bei dem durch die strategische Anordnung der Zahnradpaare in Verbindung mit ihren Synchronkupplungen eine Vielzahl von unterschiedliche Übersetzungen aufweisenden Gangstufen bereitgestellt werden, von denen dann bei einer Anwendung im Kraftfahrzeug durch eine selektive Schaltung der Doppelreibscheibenkupplung und der Synchronkupplungen verschiedene Sätze von jeweils mindestens sechs Vorwärtsgangstufen und mindestens einem Rückwärtsgang bereitgestellt werden, die in ihrer Auswahl der Übersetzung dem jeweils zum Einsatz kommenden Antriebs-Verbrennungsmotor und dessen Drehmoment angepaßt werden können.

Gemäß der Erfindung wird diese Aufgabe gelöst, indem bei einem Wechselgetriebe in 3-Wellenbauweise, insbesondere für Kraftfahrzeuge, der im Oberbegriff desPatentansprüches 1 erläuterten Art, die Anordnung, der Zahnradsätze und der Synchronkupplungen in der im Kennzeichenteil des Patentanspruches 1 erläuterten Art erfolgen und die entsprechenden Sätze von Gangstufen durch die in den nachfolgenden Diagrammen aufgezeigten Schaltungssequenzen realisiert werden.

Die Erfindung wird anhand zweier Ausführungsbeispiele näher erläutert. Es zeigt:
- Fig. 1: ein Getriebeschaubild einer ersten Ausführungsform eines erfindungsgemäßen Wechselgetriebes;
- Fig. 2: eine weitere Ausführungsform des erfindungsgemäßen Wechselgetriebes;
- Fig. 3: eine tabellarische Aufstellung über die in den verschiedenen Gangstufen eingerückten Reibscheiben- bzw. Synchronkupplungen;
- Fig. 4: eine diagrammartige Aufstellung der in feiner Abstufung realisierbaren sechzehn Vorwärtsgangstufen und
- Fig. 5a - 5d: Kraftflußdiagramme in den verschiedenen Gangstufen, wobei Fig. 5a, die direkten Gänge, Fig. 5b die kreuzgeschalteten Gänge und in den Fig. 5c und Fig. 5d die überspringend geschalteten Gänge dargestellt sind.

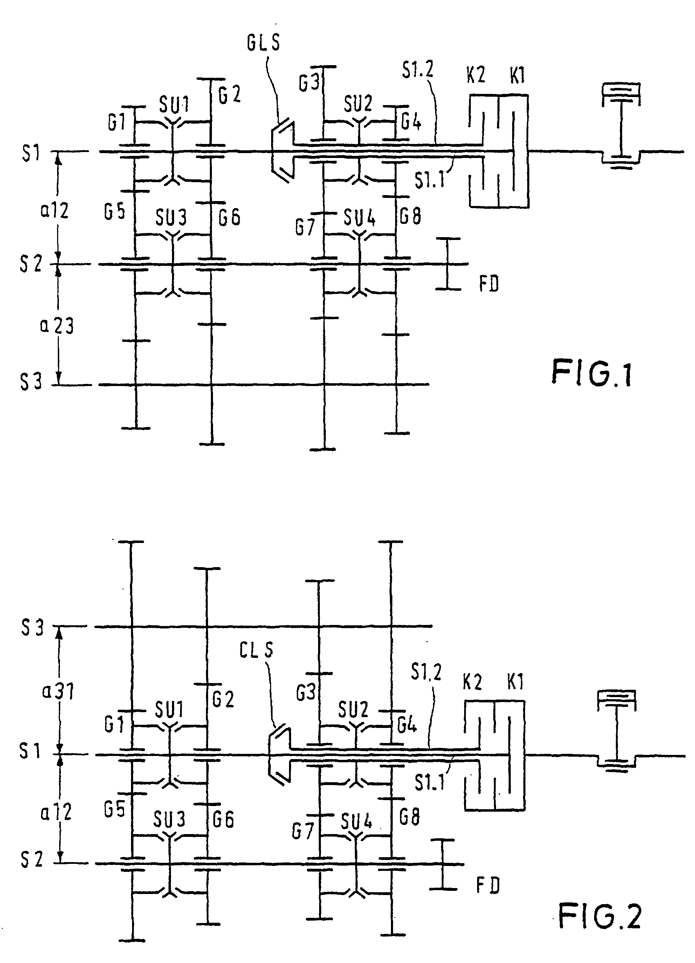

In den Figuren 1 und 2 sind übereinstimmende Bauteile mit den gleichen Bezugszeichen versehen und der Aufbau wird nachfolgend gemeinsam erläutert, wobei auf die entsprechenden Unterschiede hingewiesen wird.

In beiden Fällen ist die Kurbelwelle einer nur durch eine schematische Kolben-Pleuel-Anordnung dargestellten Brennkraftmaschine mit einer Eingangseinheit einer an sich bekannten selektiv schaltbaren Doppel-Reibscheibenkupplung treibend verbunden, deren getrennte Reibscheibenkupplungen mit K1 bzw. K2 bezeichnet sind.

Die Reibscheibe der Reibscheibenkupplung K1 treibt eine zentrale Eingangswelle an, die mit S1 bezeichnet ist und die Reibscheibe der zweiten Reibscheibenkupplung K2 treibt eine konzentrisch hierzu angeordnete Eingangshohlwelle an, die mit S1.2 bezeichnet ist.

Es muß noch darauf hingewiesen werden, daß hierbei generell die Eingangswelle des Getriebes mit S1 bezeichnet ist, wohingegen die beiden parallel hierzu angeordneten Vorgelegewellen mit S2 und S3 bezeichnet sind.

Eine der beiden Vorgelegewellen S2 und S3, hier in beiden Fällen die Vorgelegewelle S2 bildet gleichzeitig eine Ausgangswelle, auf der ein Abtriebsritzel FD zum Antrieb eines Endabtriebszahnrades angeordnet ist.

Der besondere strategische Aufbau des vorliegenden Wechselgetriebes besteht darin, daß auf der einen Vorgelegewelle S3 die verschiedenen Zahnräder in Form von Festzahnrädem nach Art eines Zahnradstufenblockes ausgebildet sind, wohingegen sämtliche auf der Eingangswelle S1 mit ihren Teilbereichen S1.1 und S1.2 und auf der Vorgelegewelle S2 angeordneten Zahnräder als Losräder angeordnet sind, zwischen denen in an sich bekannter Weise jeweils eine Synchronisierkupplung SU1, SU2, SU3 bzw. SU4 angeordnet sind.

Ein wesentliches Merkmal des vorliegenden erfindungsgemäßen Wechselgetriebes besteht nun auch noch darin, daß zwischen der zentralen Eingangswelle S1.1 und der konzentrischen Eingangshohlwelle S1.2 eine Synchronkupplung CLS vorgesehen ist, mit der die beiden Wellen drehfest miteinander verbindbar sind.

Die Zahnradpaare, die für die erzielbaren Übersetzungen verantwortlich sind, sind hierbei in den Figuren 1 und 2 durch G1 bis G8 bezeichnet. In den direkt geschalteten Gängen hat der Stufenblock keinen Einfluß auf die Übersetzungen; in allen kreuz- und überspringend geschalteten Gängen werden die vom Stufenblock zur Drehmomentübertragung genutzten Radpaare zur Übersetzungsbildung mitgenutzt.

Der verwendete Begriff der "direkt" geschalteten Gangstufen braucht wohl nicht im einzelnen erläutert zu werden.

Der benutzte Begriff der "kreuz"-geschalteten Gangstufen ist so zu verstehen, daß hier die beteiligten Doppel-Synchronisierkupplungen jeweils in einander entgegengesetzter Richtung eingeschaltet werden.

Der Begriff der "überspringend" geschalteten Gangstufen ist so zu verstehen, daß der Drehmomentverlauf bzw. Kraftfluß über ein Zahnradpaar verläuft, das im Leerlauf ist, d.h., nicht über seine benachbarte Synchronisierkupplung auf seine Welle einwirkt sondern als Losrad die Drehmomentübertragung auf eine andere Welle weitergibt.

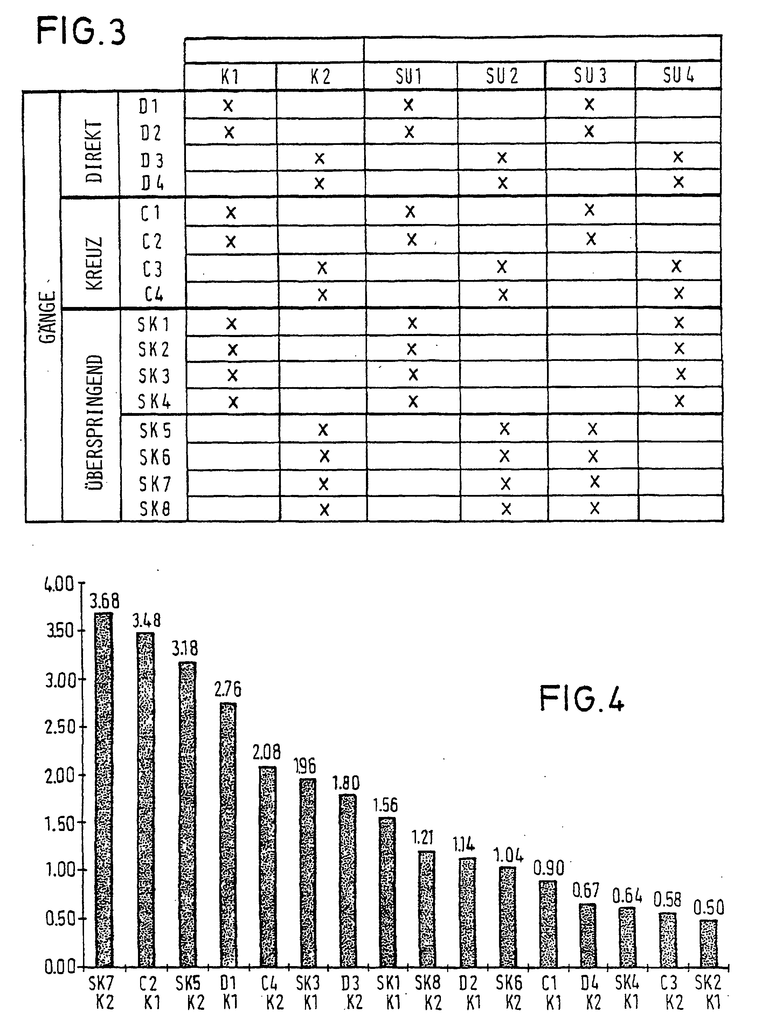

Wie die große Vielzahl der verfügbaren Gangstufen zustandekommt, wird nachfolgend im Zusammenhang mit den Figuren 3 und 4 erläutert.

Wie aus Fig. 3 ersichtlich wird, kann man die Vielzahl der verfügbaren Gangstufen in drei unterschiedliche Gruppen einteilen, in eine erste Gruppe von direkt geschalteten Gangstufen, eine zweite Gruppe von kreuzgeschalteten Gangstufen und eine dritte Gruppe von überspringend geschalteten Gangstufen.

Allen Gruppen gemeinsam ist jedoch, daß jeweils eine der beiden Reibscheibenkupplungen K1 oder K2 eingerückt sein muß und darüber hinaus jeweils zwei der im Wechselgetriebe vorhandenen Synchronisierkupplungen SU1 bis SU4 in Kraftübertragung geschaltet sein müssen.

Aus Fig. 4 ist eine diagrammartige Anordnung der sechszehn verfügbaren Schaltstufen aufgezeigt, wobei jeweils unterhalb der angegebenen Übersetzung die aus der Tabelle in Fig. 3 ersichtliche Gangstufe und die hierfür erforderliche Reibscheibenkupplung angegeben ist. Wie aus der sich abwechselnden Anordnung der Reibscheibenkupplungen K1 und K2 ersichtlich wird, kann somit jeweils von einer Gangstufe in die nächsthöhere Gangstufe zugkraftunterbrechungsfrei hochgeschaltet werden, indem die nachfolgende Kupplung eingerückt und die vorhergehende Kupplung ausgerückt wird.

Selbstverständlich wird man die hier aufgezeigte Sequenz einer Aufeinanderfolge der schaltbaren Reibungskupplungen K1 und K2 auch dann vorsehen, wenn man aus der Vielzahl von sechszehn Gangstufen nur jeweils vier oder aber sechs besonders geeignete an die Drehmomentcharakteristik der Brennkraftmaschine angepaßte Gangstufen auswählt, um sie innerhalb eines Kraftfahrzeuges dem Fahrer in Form einer Tip-Shift-Schaltung, also einer halbautomatischen Schaltweise oder aber in Form einer vollautomatischen, hilfskraftunterstützten automatischen Schaltung zur Verfügung zu stellen.

Wie sich aus einer Betrachtung der Fig. 5a bis 5d ergibt, nehmen in den in Fig. 5a gezeigten direkten Gangstufen jeweils nur ein Zahnradpaar an der Drehmomentübertragung teil.

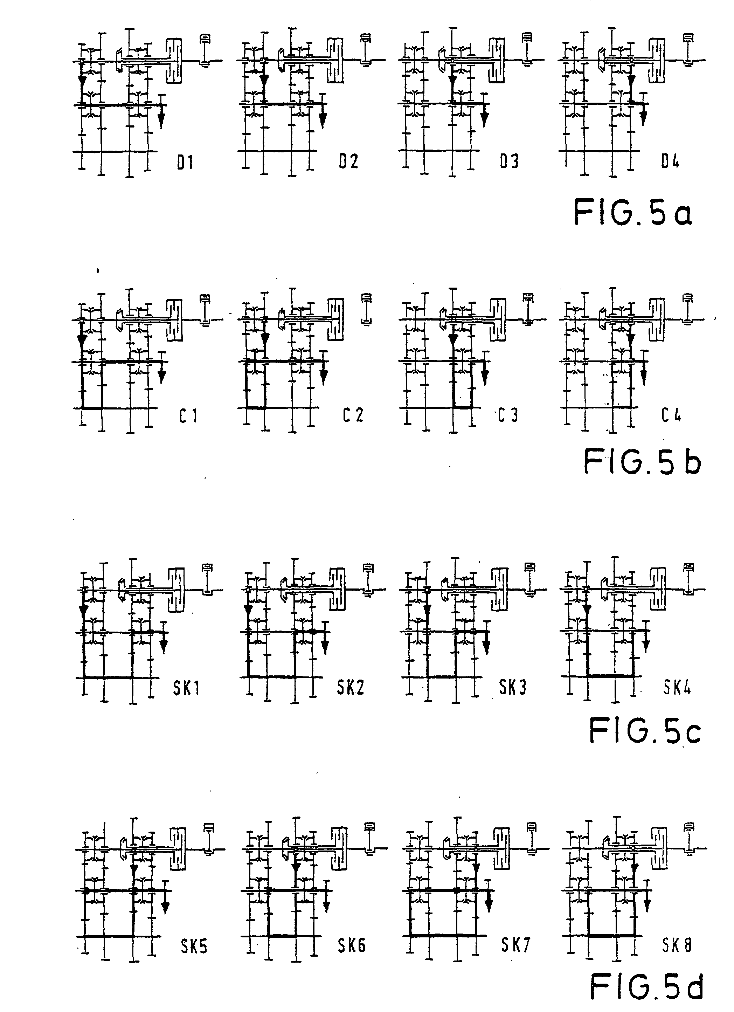

Wie aus Fig. 5b ersichtlich ist, nehmen in den kreuzgeschalteten Gangstufen jeweils zwei Zahnradpaare an der Drehmomentübertragung teil.

Aus den Fig. 5c und 5d, die die überspringend geschalteten Gangstufen zeigen, ist ersichtlich, daß hier gleichfalls jeweils zwei Zahnradpaare an der Drehmomentübertragung beteiligt sind.

## Patentansprüche

1. Wechselgetriebe in 3-Wellenbauweise, insbesondere für Kraftfahrzeuge, mit einer selektiv schaltbaren Doppel-Reibscheibenkupplung (K1 und K2), von denen eine erste Reibscheibe mit einer ersten, zentralen Eingangswelle (S1.1) und von denen eine zweite Reibscheibe mit einer zweiten, konzentrischen Eingangshohlwelle (S1.2) verbunden ist und auf der ersten und zweiten Eingangswelle (S1.1 und S1.2) Zahnräder von Zahnradpaaren angeordnet sind, die in Eingriff mit Zahnrädern auf zwei Vorgelegewellen (S2 und S3) stehen und von denen zumindest eine Vorgelegewellen (S2) mit einem Abtriebsritzel (FD) versehen ist und eine Ausgangswelle bildet und wobei die Zahnradpaare aus jeweils einem Festrad und einem Losrad bestehen, das über eine Synchronisierkupplung treibend mit seiner Getriebewelle verbindbar ist,
**dadurch gekennzeichnet, daß**
- auf der ersten und zweiten Eingangswelle (S1.1 und S1.2) jeweils zwei Losräder (G1 und G2 bzw. G3 und G4) mit zwischen ihnen angeordneten Synchronkupplungen (SU1 und SU2) angeordnet sind;
- auf der die Ausgangswelle bildenden Vorgelegewelle (S2) jeweils zwei Paare von Losrädern (G5 und G6 bzw. G7 und G8) mit zwischen ihnen angeordneten Synchronisierkupplungen (SU3 und SU4) angeordnet und sind und
- die erste zentrale Eingangswelle (S1.1) mit der zweiten konzentrischen Eingangshohlwelle (S1.2) zur Aufnahme des maximalen Anfahrdrehmomentes über eine Synchronisierkupplung (CLS) verbindbar sein kann.

2. Wechselgetriebe nach Anspruch 1,
**dadurch gekennzeichnet, daß**
- die jeweils auf den Eingangswellen (S1.1 und S1.2) und der einen Vorgelegewelle (S2) angeordneten Zahnradpaare (G1 bis G8) die verfügbaren direkten Übersetzungen definieren, wohingegen die auf der Vorgelegewelle (S3) angeordneten Zahnräder eine entsprechende treibende Verbindung zwischen den drei Getriebewellen herstellen, so daß kreuzund überspringende Schaltungen mit entsprechenden Übersetzungen realisiert werden können.

3. Wechselgetriebe nach den Ansprüchen 1 und 2,
**dadurch gekennzeichnet, daß**
- der Übergang von einer Übersetzung zur nächsthöheren Übersetzung jeweils durch den Übergang von der einen Reibscheibenkupplung (K1) zur anderen Reibscheibenkupplung (K2) zugkraftunterbrechungsfrei vorgenommen werden kann.

4. Wechselgetriebe nach den Ansprüchen 1 bis 3,
**dadurch gekennzeichnet, daß**
- von der Vielzahl von sechzehn verfügbaren Gangstufen jeweils eine Anzahl geeigneter Übersetzungsstufen ausgewählt werden, die durch einen Wechsel der Reibscheibenkupplungen (K1 und K2) zugkraftunterbrechungsfrei schaltbar sind und in Form einer Tip-Shift-Schaltung, also einer halbautomatischen hilfskraftunterstützten Schaltung oder in Form einer vollautomatischen Schaltung dem Fahrer eines Kraftfahrzeuges zur Verfügung gestellt werden.

## Claims

1. A multiple-speed gearbox of 3-shaft design, especially for motor vehicles, having a selectively switchable dual friction-disk clutch (K1 and K2), of which a first friction disk is connected to a first, central input shaft (S1.1), and of which a second friction disk is connected to a second, concentric hollow input shaft (S1.2), and gears which belong to gear pairs are arranged on the first and second input shafts (S1.1 and S1.2) and mesh with gears on two counter shafts (S2 and S3), of which at least one of the counter shafts (S2) is provided with an output drive pinion (FD) and forms an output shaft, and the gear pairs each comprising a fixed gear and a loose gear which can be connected in a driving manner to its gearbox shaft via a synchronizer clutch,
wherein
- two loose gears (G1 and G2 and G3 and G4) with synchronizing clutches (SU1 and SU2) arranged between them are in each case arranged on the first and second input shafts (S1.1 and S1.2);
- two pairs of loose gears (G5 and G6 and G7 and G8) with synchronizer clutches (SU3 and SU4) arranged between them are in each case arranged on the counter shaft (S2) forming the output shaft, and
- the first, central input shaft (S1.1) can be connectable to the second, concentric hollow input shaft (S1.2) via a synchronizer clutch (CLS) in order to take up the maximum starting torque.

2. The multiple-speed gearbox as claimed in claim 1,
wherein
- the gear pairs (G1 to G8) respectively arranged on the input shafts (S1.1 and S1.2) and the one counter shaft (S2) define the available direct ratios, whereas the gears arranged on the counter shaft (S3) produce a corresponding driving connection between the three gearbox shafts, so that cross connections and skip connections with corresponding ratios can be implemented.

3. The multiple-speed gearbox as claimed in claims 1 and 2, wherein
- the transition from one ratio to the next highest ratio can in each case be performed without interrupting the tractive force by the transition from the one friction-disk clutch (K1) to the other friction-disk clutch (K2).

4. The multiple-speed gearbox as claimed in claims 1 to 3, wherein
- from the large number of sixteen available speed steps, in each case a number of suitable ratio steps is selected which can be shifted without interrupting the tractive force by changing the friction-disk clutches (K1 and K2), and are made available to the driver of a motor vehicle in the form of a tip-shift selector mechanism, that is to say a semiautomatic power-assisted selector mechanism, or in the form of a fully automatic selector mechanism.

## Revendications

1. Boîte de vitesses du type à trois arbres, en particulier pour véhicules automobiles, comprenant un double embrayage à disques de friction (K1 et K2) à changement de vitesses sélectif, dont un premier disque de friction est connecté à un premier arbre d'entrée central (S1.1) et dont un deuxième disque de friction est connecté à un deuxième arbre creux d'entrée concentrique (S1.2) et sur les premier et deuxième arbres d'entrée (S1.1 et S1.2) étant disposées des roues dentées de paires de roues dentées qui sont en prise avec des roues dentées sur deux arbres secondaires (S2 et S3) et dont au moins un arbre secondaire (S2) est pourvu d'un pignon de sortie (FD) et forme un arbre de sortie et les paires de roues dentées se composant à chaque fois d'une roue fixe et d'une roue libre, qui peut être connectée par entraînement par le biais d'un accouplement synchrone à son arbre de transmission,
**caractérisée en ce que**
- sur le premier et le deuxième arbres d'entrée (S1.1 et S1.2) sont disposées à chaque fois deux roues libres (G1 et G2, respectivement G3 et G4) avec des accouplements synchrones (SU1 et SU2) disposés entre elles ;
- sur l'arbre secondaire (S2) formant l'arbre de sortie sont disposées à chaque fois deux paires de roues libres (G5 et G6, respectivement G7 et G8) avec des accouplements synchrones (SU3 et SU4) disposés entre elles et
- le premier arbre d'entrée central (S1.1) peut être connecté par le biais d'un accouplement synchrone (CLS) au deuxième arbre creux d'entrée concentrique (S1.2) pour recevoir le couple de démarrage maximal.

2. Boîte de vitesses selon la revendication 1,
**caractérisée en ce que**
- les paires de roues dentées (G1 à G8) disposées à chaque fois sur les arbres d'entrée (S1.1 et S1.2) et le premier arbre secondaire (S2) définissent les rapports directs disponibles, tandis que les roues dentées disposées sur l'arbre secondaire (S3) produisent une connexion d'entraînement correspondante entre les trois arbres de transmission, de sorte que des changements croisés et à saut puissent être réalisés avec des rapports correspondants.

3. Boîte de vitesses selon les revendications 1 et 2,
**caractérisée en ce que**
- le passage d'un rapport au rapport supérieur immédiat peut s'effectuer à chaque fois par le passage d'un accouplement à disques de friction (K1) à l'autre accouplement à disques de friction (K2) sans interruption de la force de traction.

4. Boîte de vitesses selon les revendications 1 à 3,
**caractérisée en ce que**
- sur la pluralité de seize sélections de vitesses disponibles, on choisit à chaque fois un nombre de gammes de vitesses appropriées qui sont sélectionnables par un échange des accouplements à disques de friction (K1 et K2) sans interruption de la force de traction et qui sont disponibles au conducteur d'un véhicule automobile sous la forme d'une variation par impulsion Tip-Shift, c'est-à-dire d'une variation de vitesse semi-automatique assistée ou sous la forme d'une variation totalement automatique.
